# EUROPÄISCHE PATENTSCHRIFT

(11) **EP 0 712 596 B1**
(45) Veröffentlichungstag und Bekanntmachung des Hinweises auf die Patenterteilung: **16.04.1997**
(21) Anmeldenummer: 95117110.7
(22) Anmeldetag: 31.10.1995
(51) Int. Cl.: A47J 37/10

(54) **Abdeckhaube für Brat- und Kochgerätschaften**
Cover for frying and cooking appliances
Couvercle pour des récipients de rôtissage ou de cuisson

(30) Priorität: 15.11.1994 DE 9418325 U
(43) Veröffentlichungstag der Anmeldung: 22.05.1996
(73) Patentinhaber: Repac, Petra, 65611 Brechen (DE); Culig, Branko, 68332 Gradac (SI)
(72) Erfinder: Culig, Branko, SI-68332 Gradac (SI)
(74) Vertreter: Müller, Eckhard, Dr.

(56) Entgegenhaltungen:
- EP-A- 0 115 561
- WO-A-93/25134
- DE-A- 2 608 976
- DE-A- 3 311 247
- DE-A- 3 505 630
- US-A- 2 609 960
- US-A- 2 643 024

## Beschreibung

Die Erfindung betrifft eine Abdeckhaube für Brat- und Kochgerätschaften gemäß den Merkmalen des Oberbegriffs des Anspruchs 1.

Eine gattungsgemäße Abdeckhaube ist beispielsweise aus der DE 35 05 630 C1 bekannt. Sie besteht aus einem kegelstumpfförmig ausgebildeten Haubenteil und einem mit dem Haubenteil verbindbaren ringförmigen, auf der Gerätschaft aufsitzenden Bodenteil. Durch das Haubenteil, welches aus Glas oder Metall besteht, wird die Temperatur an der Oberseite des zuzubereitenden Fleischstückes erhöht und die Zubereitungszeit vermindert. Dabei können überschüssige Dämpfe durch eine entsprechende Öffnung in der Spitze des Haubenteiles entweichen. Das torusförmige Bodenteil weist eine umlaufende Auffangrinne für den an der Unterseite des Haubenteiles kondensierten Wasserdampf und Fettspritzer (kondensierte Wrasen) auf.

Bei der bekannten Abdeckhaube wird durch entsprechende Halterungen das Haubenteil im Höhenabstand über de Rinne des Bodenteiles und im Seitenabstand neben einem an der Außenseite des Bodenteiles angeordneten hochstehenden Randes gehalten. Durch eine derartige Anordnung soll gewährleistet werden, daß einerseits Luft von unten unter das Haubenteil dringt, sich mit den Wrasen vermischt und oben durch die Öffnung an der Spitze der Abdeckhaube wieder entweicht. Außerdem soll durch die Verwendung eines separaten Bodenteiles erreicht werden, daß die Abdeckhaube gleichzeitig für eine Vielzahl von Brat- und Kochgerätschaften verwendet werden kann.

Nachteilig ist bei der bekannten Abdeckhaube vor allem der relativ hohe Aufwand für die Fertigung des mit hochstehenden Rändern versehenen Bodenteiles. Außerdem hat sich gezeigt, daß durch die zwischen Hauben- und Bodenteil vorhandenen Lufteintrittsöffnungen Fettspritzer nach aßen auf die Herdplatte oder den Herd gelangen können.

Aus der DE 26 08 976 A1 ist eine einteilige kegelstumpfförmige Abdeckhaube bekannt, die an ihrer Spitze ebenfalls eine Öffnung zum Entweichen überschüssigen Wasserdampfes aufweist. Der untere Rand dieser Abdeckhaube ist nach innen gebogen, so daß eine umlaufende Rinne zum Auffangen der kondensierten Wrasen entsteht. Der Außendurchmesser des unteren Randes der Abdeckhaube ist größer als der Durchmesser einer damit abzudeckenden Brat- oder Kochgerätschaft und liegt auf nasenförmigen Halterungen auf, die seitlich an den Außenwänden der Gerätschaft angeordnet sind. Da zwischen Pfanne und Abdeckhaube ein ringförmiger Spalt verbleibt, kann auch bei Verwendung dieser Abdeckhaube Luft von unten unter die Abdeckhaube gelangen.

Auch bei dieser Abdeckhaube ist es besonders nachteilig, daß Fettspritzer aufgrund des seitlichen Zwischenraumes zwischen dem Rand der Brat- oder Kochgerätschaft und dem Rand der Abdeckhaube nach außen auf die Herdplatte oder den Herd spritzen können. Außerdem ist die Abdeckhaube nur für solche Gerätschaften verwendbar, die speziell an diese Abdeckhaube angepaßt sind und entsprechende Halterungen aufweisen.

Aus der DE 33 11 247 A1 sind ebenfalls einteilige Abdeckhauben für Brat- und Kochgerätschaften mit kegelstumpfförmig ausgebildeten Haubenteil bekannt, die dichtend auf dem oberen Rand der Gerätschaft aufliegen. Die Öffnung der Spitze der Abdeckhaube kann bei diesen bekannten Hauben auch durch einen Deckel verschlossen werden.

Nachteilig bei derartigen Abdeckhauben ist unter anderem, daß sie am unteren Rand keine Auffangrinne für die kondensierten Wrasen aufweisen. Außerdem sind derartige Abdeckhauben in der Regel nur für Brat- und Kochgerätschaften verwendbar, deren Rand etwa den gleichen Außendurchmesser aufweisen wie der untere Rand der Abdeckhaube.

Aus der US-A-2 609 960 ist ein Bräter o. dgl. bekannt, auf den ein erster, eine Mehrzahl von Durchbrechungen aufweisender Deckel aufsetzbar ist. Dieser erste Deckel weist einen äußeren, zunächst flachen und dann nach außen oben bogenförmig gekrümmten Rand auf. Auf diesen Rand ist ein zweiter, oberer Deckel mit einem äußeren, eingerollten Rand aufsetzbar, wobei die einander aufgesetzten Deckel formschlüssig aufeinander liegen.

Demgegenüber liegt der Erfindung die Aufgabe zugrunde, eine zweiteilige Abdeckhaube von einfachem und kostengünstigem Aufbau anzugeben, bei der ein Herausspritzen des Fettes sicher verhindert wird und die auch leicht zu reinigen ist. Dabei soll die Abdeckhaube ebenfalls für eine Vielzahl von Brat- und Kochgerätschaften verwendbar sein. Diese Aufgabe wird durch die Merkmale des kennzeichnenden Teils des Anspruchs 1 gelöst. Weitere vorteilhafte Ausgestaltungen der Erfindung offenbaren die Unteransprüche. Nach der Erfindung sind das Bodenteil und das Haubenteil mittels Verriegelungsmitteln lösbar miteinander verbunden und der untere Rand des mit dem Bodenteil verbundenen Haubenteiles sitzt im Bereich des äußeren Randes des Bodenteils formschlüssig auf. Hierdurch ist es möglich, anstatt eines Bodenteils mit hochstehendem Rand ein relativ flaches Bodenteil zu verwenden, auf dem das Haubenteil formschlüssig im Bereich des äußeren Randes des Bodenteils aufsitzt. Wahrend des bestimmungsgemäßen Gebaus der Abdeckhaube sind das Bodenteil und das Haubenteil mittels der Verriegelungsmittel sicher miteinander verbunden. Bspw. zum Reinigen der erfindungsgemäßen Abdeckhaube können die Verriegelungsmittel gelöst und das Haubenteil und das Bodenteil getrennt voneinander gereinigt werden.

Dabei hat es sich gemäß einer Weiterbildung der Erfindung als vorteilhaft erwiesen, daß das Bodenteil in bezug auf die Unterkante der Auffangrinne eine maximale Höhe zwischen etwa 5 mm und etwa 15 mm aufweist.

Als lösbare Verriegelungsmittel zur Verbindung des Haubenteils und des Bodenteils kommen nach einer anderen Ausgestaltung der Erfindung von Vorteil eine Blattfeder in Frage, welche zum Lösen der Verbindung zwischen Hauben- und Bodenteil einfach zu betätigen ist.

Dabei hat es sich als vorteilhaft erwiesen, daß die Blattfeder eine Verriegelungsnase aufweist, mit welcher das Bodenteil und das Haubenteil lösbar miteinander verbindbar sind.

Gemäß einer weiteren vorteilhaften und alternativen Ausgestaltung der Verriegelungsmittel sind das Bodenteil und das Haubenteil an ihren äußeren Rändern flach ausgebildet und miteinander mittels eines Spannringes mit U-förmigem Profil verbunden. Zum Reinigen lassen sich Boden- und Haubenteil dabei auf einfache Weise lediglich durch Öffnen des Spannringes trennen.

Bei einem weiteren, in der Praxis besonders bewährten Ausführungsbeispiel erfolgt die Verbindung mittels mehrerer am Umfang des Bodenteils angeordneter Stecklaschen, in die der untere Rand des Haubenteiles einschiebbar ist.

Von Vorteil erstreckt sich der Griff i. w. bis zum unteren Rand des Haubenteils, wodurch eine einfache Festlegung des Griffs an dem Haubenteil ermöglicht ist.

Gemäß einer weiteren, vorteilhaften Weiterbildung der Erfindung ist bevorzugt in einem unteren Ende des Griffes eine Blattfeder o. dgl. vorgesehen, die eine Ausnehmung, Durchbrechung o. dgl. des Bodenteils durchgreift und mittels eines nasenförmigen Verriegelungsgliedes o. dgl. das Bodenteil hintergreift. Hierdurch wird das Haubenteil gegen das Bodenteil dichtend angelegt.

Die Verbindung des Haubenteils mit dem Bodenteils wird von Vorteil dadurch weiter vereinfacht, daß mindestens zwei Laschen am Bodenteil angeordnet sind. Während diese Laschen i. w. eine Haltefunktion ausüben, kann mittels der Verriegelungsmittel ein Verbinden bzw. Trennen von Haubenteil und Bodenteil durchgeführt werden.

Dabei sind die Laschen bzw. die Ausnehmungen i. w. gleich verteilt über dem Umfang des Randes des Bodenteils angeordnet, wodurch sich eine besonders dauerhafte und sichere Verbindung des Bodenteils mit dem Haubenteil ergibt.

Nach einer anderen besonders vorteilhaften Ausgestaltung der Erfindung ist die im Griff angeordnete Blattfeder mittels eines von außen bedienbaren Bolzens zum Haubenteil hin bewegbar. Bei Betätigung des Bolzens befindet sich die Verriegelungsnase unter der Ausnehmung des Bodenteils, so daß das Haubenteil und das Bodenteil leicht voneinander getrennt werden können.

Dabei ist es gemäß einer weiteren vorteilhaften Weiterbildung der Erfindung zum Trennen des Haubenteils von dem Bodenteil durchaus ausreichend, daß die Verriegelungsnase in eine Entriegelungsposition bewegt wird.

Nach einer vorteilhaften Weiterbildung der Erfindung weist das Bodenteil ein oder mehrere, kreisringförmig umlaufende, stufenartige Absätze auf, wobei der Durchmesser eines jeden Kreisringes i. w. dem Standarddurchmesser verschiedener Brat- und Kochgerätschaften entspricht. Hierdurch wird ein sicherer Halt der Abdeckhaube auch auf Pfannen und Kochgeschirr unterschiedlicher Größe gewährleistet, wobei der Durchmesser der kreisringförmig umlaufenden stufenartigen Absätze den entsprechenden Standardgrößen angepaßt ist.

Nach einer weiteren Ausführungsform der Erfindung weist die Öffnung einen Durchmesser im Bereich von etwa 4,5 cm bis etwa 7,5 cm, bevorzugt etwa 6 cm auf. Dadurch, daß diese Öffnung um einiges größer als die herkömmliche Öffnung gehalten ist, wird die Möglichkeit geschaffen, bspw. mittels eines Löffels durch die Öffnung in das Bratgut einzutauchen und dieses umzurühren. Ein weiterer Vorteil dieser relativ großen Öffnung besteht auch darin, daß Flüssigkeit dem Gar- bzw. Bratgut zugesetzt werden kann, ohne daß die Abdeckhaube von der Gerätschaft abgenommen werden müßte. Zusätzlich ist aufgrund der relativ großen Öffnungsweite der Öffnung die Gefahr des Verschüttens der Flüssigkeit weitestgehend minimiert.

Ebenfalls als vorteilhaft hat es sich erwiesen, daß der obere Rand des Haubenteils eine sich hin zur Öffnung erstreckende Rundschulter aufweist, wodurch eine mögliche Verletzungsgefahr beim Reinigen der Abdeckhaube sowie bei Manipulationen im Bereich der Öffnung weitestgehend vermieden ist.

Nach einer vorteilhaften Ausgestaltung der Erfindung weist der obere Rand des Haubenteils eine in den Haubeninnenraum gerichtete, i. w. kreisringförmig umlaufende Abtropfnase auf. Aufgrund dieser Maßnahme wird vermieden, daß durch die Öffnung eingefüllte Flüssigkeit, welche dem Bratgut oder Gargut zugesetzt werden soll, am Innenrand des Haubenteils entlang in die Auffangrinne fließt.

Nach einem weiteren vorteilhaften Merkmal der Erfindung weist der Griff in einem oberen Abschnitt auf der Griffaußenseite eine bevorzugt winklig ausgebildete Erhöhung zur Anlage eines Daumens der Griffhand des Benutzers auf. Aufgrund dieser Maßnahme wird die Griffhand des Benutzers sozusagen zwangsgeführt in eine bestimmte Position bzgl. des Griffes gelenkt, wobei der Daumen der Griffhand oberhalb dieser Erhöhung oder Verdickung zu liegen kommt. Hierdurch ist verhindert, daß die Griffhand in Berührung mit dem u. U. sehr heißen Haubenteil kommen kann.

In konstruktiv äußerst einfacher und kostengünstiger Weise ist der Griff mittels eines ersten, den oberen Rand hakenförmig hintergreifenden Haltebügels sowie eines zweiten, den unteren Rand hakenförmig hinter- bzw. umgreifenden Haltebügels an dem Haubenteil befestigt.

Dabei hat es sich als vorteilhaft erwiesen, daß der erste Haltebügel eine rückwärtige, mit Widerhaken o. dgl. Rast- oder Klemmitteln versehene Zunge aufweist, die in einer Ausnehmung am oberen Endabschnitt des Griffes einsteckbar und verrastbar ist. Hierdurch ist eine einfache und selbsttätige Festlegung des ersten Haltebügels am Griff gewährleistet.

Nach einer äußerst vorteilhaften Weiterbildung der Erfindung ist die Blattfeder in einer Ausnehmung am unteren Endabschnitt des Griffes angeordnet, wobei an einem Schenkel der insbesondere i. w. U-förmig ausgebildeten Blattfeder die Verriegelungsnase und an dem anderen Schenkel der Haltebügel jeweils, insbesondere einstückig angeformt sind. Der Blattfeder kommen somit mehrere Funktionen zu. Zum einen wird die Federelastizität der Blattfeder dazu ausgenutzt, um durch eine entsprechende Betätigung das Haubenteil von dem Bodenteil zu trennen. Weiterhin weist ein Schenkel der Blattfeder die Verriegelungsnase auf, mit der in der Verriegelungsstellung das Bodenteil an dem Haubenteil gehaltert ist. Schließlich dient das andere Ende der Blattfeder zur Befestigung des Griffes an dem Haubenteil.

Dabei ist die Blattfeder in der Ausnehmung mittels eines in der Griffwandung eingebrachten Stiftes unverlierbar gehalten bzw. gesichert.

Das Haubenteil als auch das Bodenteil kann aus Borosilicatglas, Aluminium, Edelstahl oder veredeltem Stahlblech bestehen.

Weitere Ziele, Vorteile und Anwendungsmöglichkeiten der vorliegenden Erfindung ergeben sich aus der nachfolgenden Beschreibung der Ausführungsbeispiele anhand der Zeichnungen.

Es zeigen:
- Figur 1: einen Längsschnitt durch ein erstes Ausführungsbeispiel einer erfindungsgemäßen Abdeckhaube mit einer Bratpfanne,
- Figur 2: einen in Figur 1 mit II bezeichneten Ausschnitt in vergrößerter Darstellung,
- Figur 3: eine perspektivische Ansicht der in Figur 1 dargestellten Abdeckhaube,
- Figur 4: eine Seitenansicht eines zweiten Ausführungsbeispieles einer erfindungsgemäßen Abdeckhaube, die teilweise im Schnitt dargestellt ist,
- Figur 5: einen in Figur 4 mit V bezeichneten Ausschnitt in vergrößerter Darstellung,
- Figur 6: eine perspektivische Ansicht eines dritten Ausführungsbeispiels einer erfindungsgemäßen Abdeckhaube,
- Figur 7: die Abdeckhaube der Figur 6 in Seitenansicht,
- Figur 8: die Abdeckhaube der Figur 6 in Draufsicht,
- Figur 9: die Schnittdarstellung eines Details der Figur 8 entlang der Schnitt A-A,
- Figur 10: die Schnittdarstellung eines Details der Figur 8 entlang der Schnittlinie B-B,
- Figur 11: ein Detail C der Figur 10 in vergrößerter Darstellung und
- Figur 12: ein Detail D der Figur 10 in vergrößerter Darstellung.

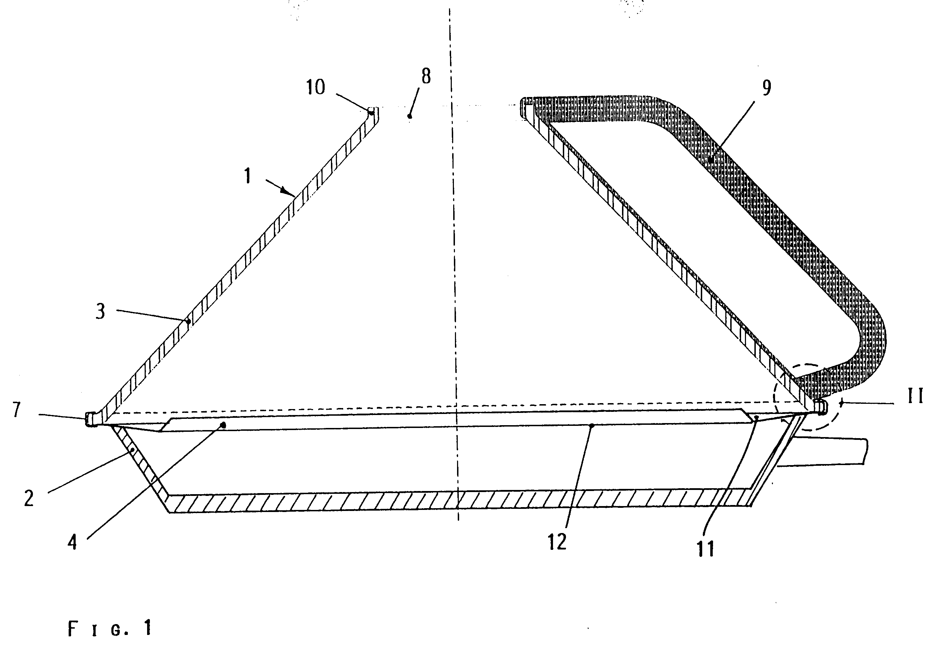

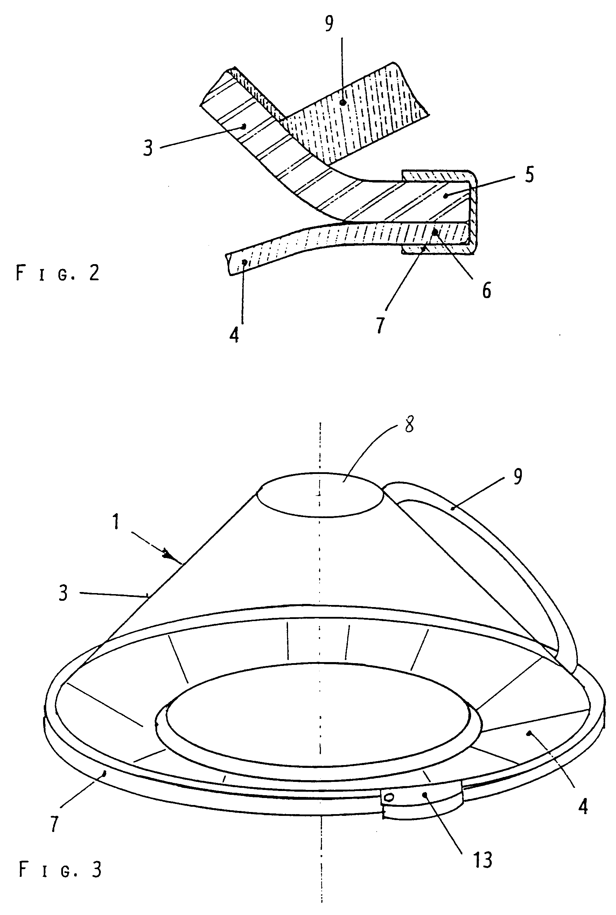

In Figur 1 ist mit 1 eine Abdeckhaube und mit 2 eine Bratpfanne bezeichnet. Die Abdeckhaube 1 besteht aus einem kegelstumpfförmig ausgebildeten Haubenteil 3 aus Borosilicatglas und einem flachen ringförmigen Bodenteil 4 aus Edelstahl. Hauben- und Bodenteil sind an ihren äußeren Rändern 5, 6 (Figur 2) flach ausgebildet und mittels eines Spannringes 7 mit U-förmigem Profil miteinander formschlüssig verbunden.

Das Haubenteil 3 weist im Bereich seines kleinsten Durchmessers eine Öffnung 8 (Figur 1) auf, durch die der überschüssige Wasserdampf entweichen kann. Seitlich ist an dem Haubenteil 3 ein Griff 9 angeordnet, der sowohl am oberen als auch am unteren Rand 10, 5 des Haubenteils 3 befestigt ist.

Das Bodenteil 4 enthält eine Auffangrinne 11 für die kondensierten Wrasen. Das gesamte Bodenteil 4 ist relativ flach ausgebildet und besitzt eine maximale Höhe in bezug auf die Unterkante 12, die i. w. nur von der Menge der durch die Auffangrinne 11 aufzunehmenden Wrasen abhängt und zwischen 5 und 15 mm liegt.

Figur 3 zeigt eine perspektivische Ansicht der Abdeckhaube 1. Dabei ist mit dem Bezugszeichen 13 ein Schließbügel bezeichnet, mit dessen Hilfe der Spannring 7 angezogen bzw. zur Trennung von Hauben- und Bodenteil 3, 4 wieder gelöst werden kann.

Um Hauben- und Bodenteil 3, 4 zur bestimmungsgemäßen Benutzung der Abdeckhaube 1 miteinander zu verbinden, braucht das Haubenteil 3 mit seinem unteren Rand 5 lediglich auf das Bodenteil 4 aufgesetzt, der Spannring 7 von außen um die Ränder 5 und 6 gelegt und anschließend mit dem Schließbügel angezogen werden. Der Öffnungsvorgang, etwa zum getrennten Reinigen von Hauben- und Bodenteil sowie von dem Spannring, erfolgt in umgekehrter Reihenfolge.

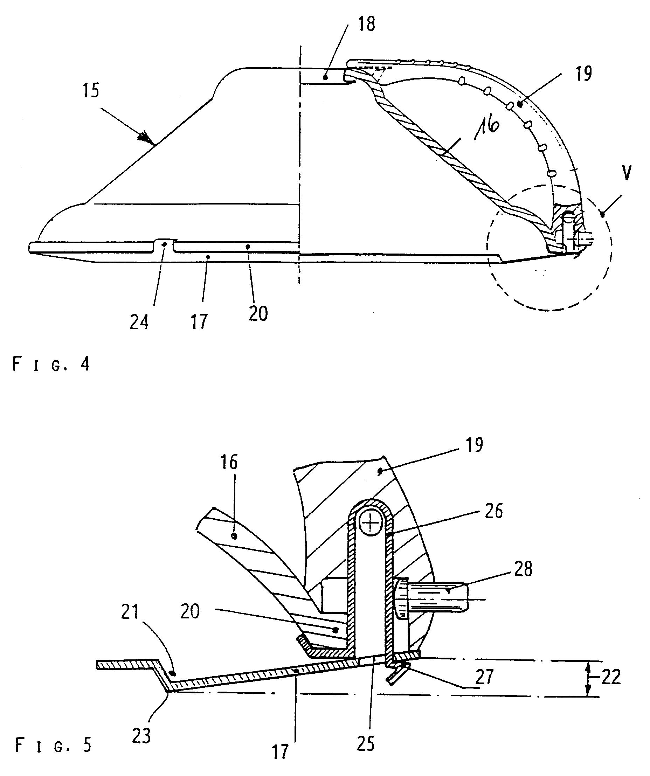

In den Figuren 4 und 5 ist ein weiteres Ausführungsbeispiel einer erfindungsgemäßen Abdeckhaube dargestellt. Dabei ist mit 15 die Abdeckhaube bezeichnet, die wiederum aus einem kegelstumpfförmigen Haubenteil 16 und einem flachen torusförmigen Bodenteil 17 besteht. In der Spitze des Haubenteiles 16 befindet sich eine Öffnung 18 zum Entweichen des Wasserdampfes. Außerdem ist ein Griff 19 vorgesehen, der sich bis zum unteren Rand 20 des Haubenteiles 16 erstreckt.

Das Bodenteil 17 enthält eine Auffangrinne 21 für die kondensierten Wrasen und weist eine maximale Höhe 22 in bezug auf die Unterkante 23 von etwa 10 mm auf.

Zur Befestigung des Haubenteiles 16 auf dem Bodenteil 17 weist letzteres zwei Stecklaschen 24 auf, von denen in Figur 4 nur eine zu sehen ist (die zweite Stecklasche befindet sich auf der dem Betrachter abgewandten Seite). Außerdem ist auf der dem Handgriff 19 gegenüberliegenden Seite des Bodenteiles 17 eine Ausnehmung 25 (Figur 5) vorgesehen, durch die eine in dem Griff 19 befestigte Blattfeder 26 ragt. Die Blattfeder 26 ist an ihrem bodenseitigen Ende 27 nasenförmig ausgebildet (Verriegelungsnase) und hintergreift das Bodenteil 17. Dadurch wird das Haubenteil 16 fixiert und dichtend gegen das Bodenteil 17 gedrückt.

Zum Trennen von Boden- und Haubenteil 16, 17 wird die Blattfeder 26 mittels eines von außen in den Griff 19 drückbaren Bolzens 28 zum Haubenteil 16 hingedrückt, so daß sich die Verriegelungsnase 27 unter der Ausnehmung 25 des Bodenteiles 23 befindet. Durch leichtes Hochheben des Haubenteiles 16 und anschließendes Herausziehen des Randes 20 des Haubenteiles 16 aus den Stecklaschen 24 des Bodenteiles werden dann beide Teile wieder voneinander getrennt.

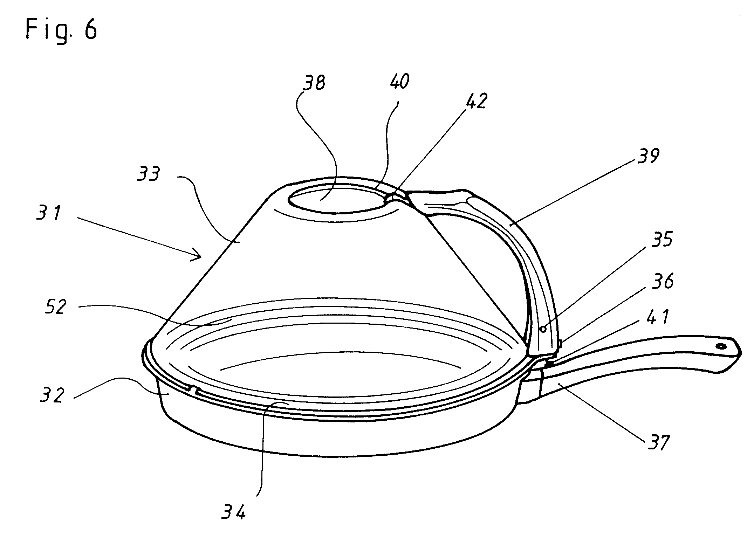

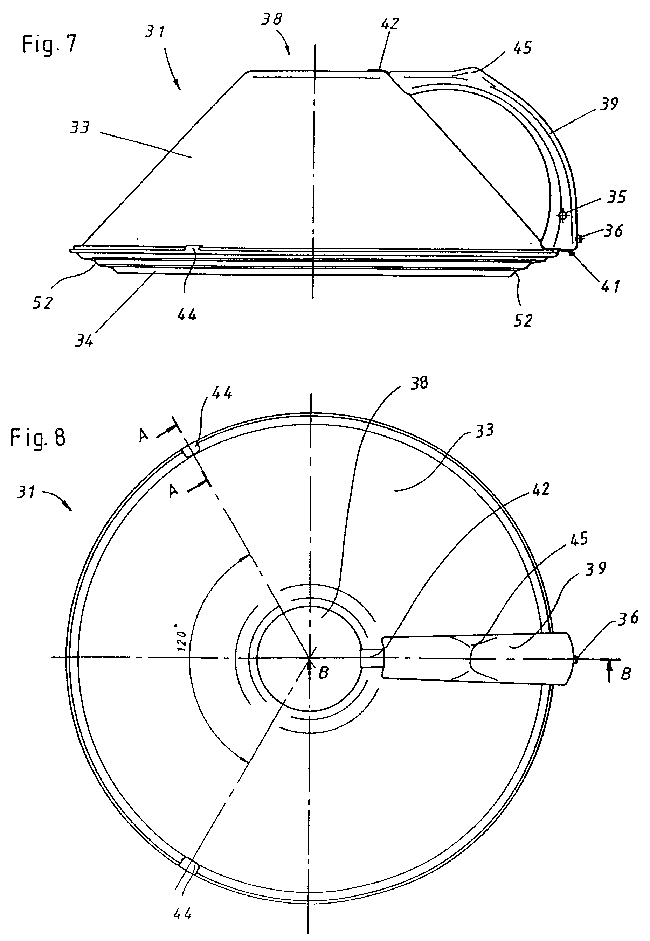

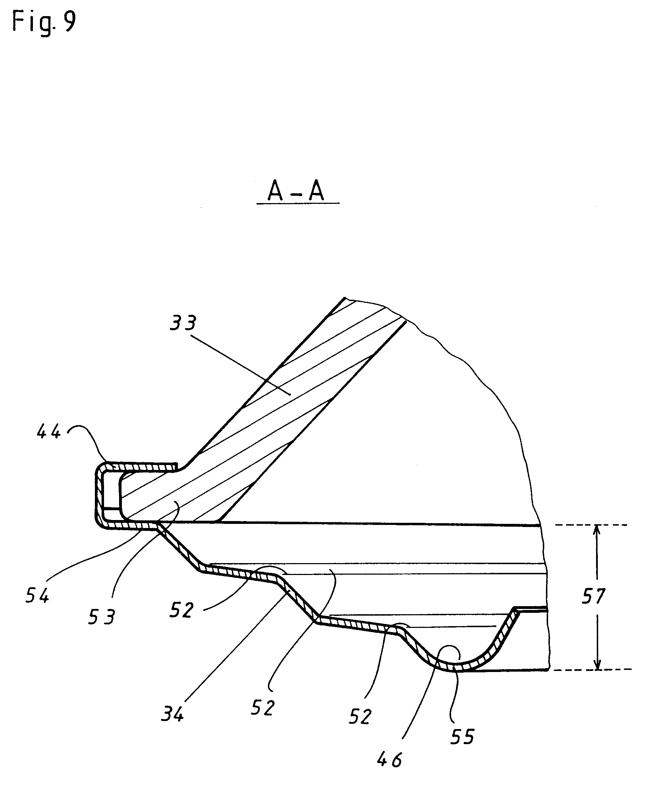

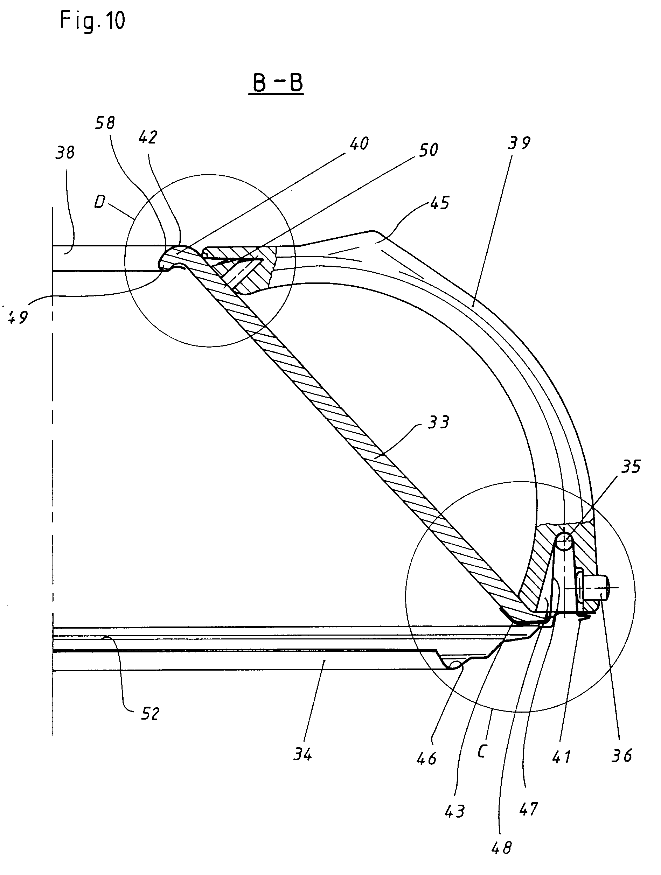

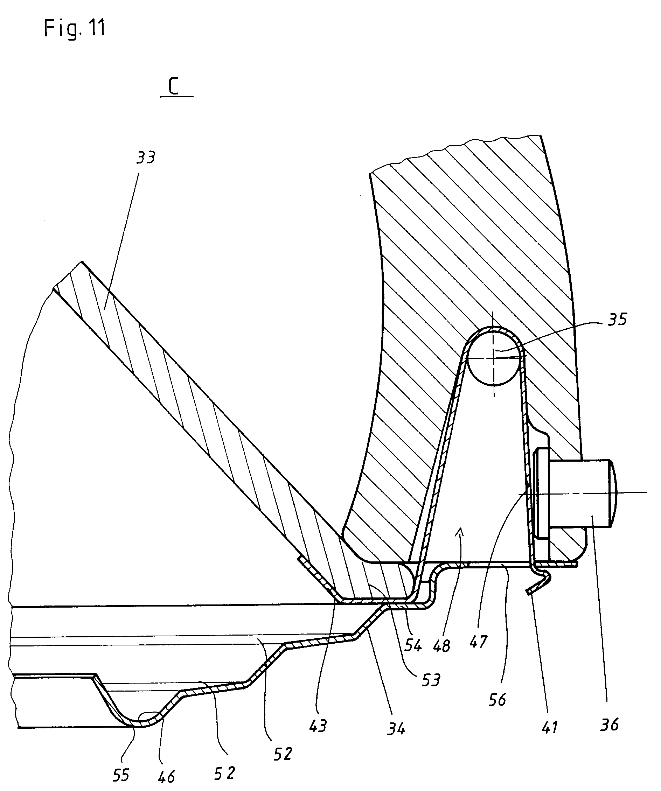

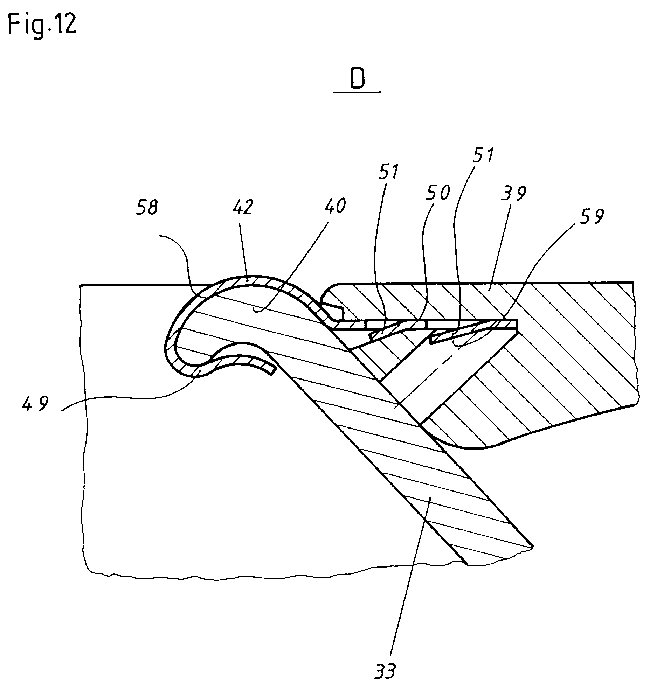

In den Figuren 6 bis 12 ist ein drittes Ausführungsbeispiel einer Abdeckhaube 31 nach der Erfindung dargestellt. Die Abdeckhaube 31 sitzt gemäß Figur 6 auf dem Rand einer Bratpfanne 32 mit einem Pfannenstil 37 auf. Desweiteren besteht die Abdeckhaube 31 aus einem kegelstumpfförmig ausgebildeten Haubenteil 33 mit einem am unteren Rand 53 angeordneten Bodenteil 34. Das Bodenteil 34 weist, wie auch in den vorherigen Ausführungsbeispielen, eine maximale Höhe 57 zwischen etwa 5 und 15 mm auf.

Das Bodenteil 34 besitzt ein oder mehrere, kreisringförmig umlaufende, stufenartige Absätze 52, wobei der Durchmesser eines jeden Kreisringes dieser ringförmig umlaufenden Absätze 52 i. w. den Standarddurchmesser verschiedener Brat- und Kochgerätschaften 32 entspricht. Die an dem oberen Rand 40 des Haubenteils 33 ausgebildete Öffnung 38 besitzt einen Durchmesser von etwa 6 cm. Desweiteren weist der obere Rand 40 eine sich hin zur Öffnung 38 erstreckende umlaufende Rundschulter 58 auf. Schließlich ist an dem oberen Rand 40 des Haubenteils 33 eine in den Haubeninnenraum gerichtete, i. w. kreisringförmig umlaufende Abtropfnase 49 vorgesehen.

Der Griff 39 besitzt in einem oberen Abschnitt auf der Griffaußenseite eine bevorzugt winklig ausgebildete Erhöhung 45 zur Anlage eines Daumens der Griffhand des Benutzers. An dem Haubenteil 33 ist der Griff 39 mittels eines ersten, den oberen Rand 40 hakenförmig hintergreifenden Haltebügels 42 sowie eines zweiten, den unteren Rand 53 hakenförmig umgreifenden bzw. hintergreifenden Haltebügels 43 befestigt. Der erste Haltebügel 42 ist rückwärtig mit einer Widerhaken 51 aufweisenden Zunge 50 versehen, die in eine Ausnehmung 59 am oberen Endabschnitt des Griffes 39 einsteckbar und verrastbar ist.

Die Blattfeder 47 ist in einer Ausnehmung 48 am unteren Endabschnitt des Griffs 39 angeordnet. An einem Schenkel der i. w. U-förmig ausgebildeten Blattfeder 47 sind die Verriegelungsnase 41 und an dem anderen Schenkel der Haltebügel 43 einstückig angeformt. Die Blattfeder 47 ist in der Ausnehmung 48 mittels eines in der Griffwandung eingebrachten Stiftes 35 gesichert. Betätigt wird die Blattfeder 47 mittels der in dem unteren Abschnitt des Griffes 39 außenseitig angeordneten Bolzens 36, um die Verriegelungsnase 41 zu entriegeln und das Bodenteil 34 vom Haubenteil 33 zu lösen. Weitere Haltepunkte zwischen dem Haubenteil 33 und dem Bodenteil 34 werden durch die insbesondere U-förmigen Laschen 44 gebildet, welche an dem äußeren Rand 54 des Bodenteils einstückig angeformt sind.

Die Auffangrinne 46 erstreckt sich unterhalb der stufenartigen Absätze 52 des Bodenteils 34 im Bereich der Unterkante 55. Im Bereich der Verriegelungsnase 41 weist das Bodenteil 34 am äußeren Rand 54 eine Abwinklung auf, die mit einer Ausnehmung 57 bzw. Durchbrechung versehen ist, so daß diese Abwinklung von der Verriegelungsnase 41 in der Verriegelungsstellung untergriffen werden kann.

### Bezugszeichenliste

- 1 -: Abdeckhaube
- 2 -: Bratpfanne, Brat- und Kochgerätschaft
- 3 -: Haubenteil
- 4 -: Bodenteil
- 5 -: untere äußere Rand des Haubenteils
- 6 -: äußere Rand des Bodenteils
- 7 -: Spannring
- 8 -: Öffnung
- 9 -: Griff
- 10 -: obere Rand des Haubenteils
- 11 -: Auffangrinne
- 12 -: Unterkante des Bodenteils
- 13 -: Schließbügel
- 15 -: Abdeckhaube
- 16 -: Haubenteil
- 17 -: Bodenteil
- 18 -: Öffnung
- 19 -: Griff
- 20 -: untere Rand des Haubenteils
- 21 -: Auffangrinne
- 22 -: Höhe des Bodenteils
- 23 -: Unterkante des Bodenteils
- 24 -: Lasche
- 25 -: Ausnehmung, Durchbrechung
- 26 -: Blattfeder
- 27 -: Verriegelungsnase
- 28 -: Bolzen
- 31 -: Abdeckhaube
- 32 -: Bratpfanne
- 33 -: Haubenteil
- 34 -: Bodenteil
- 35 -: Stift
- 36 -: Bolzen
- 37 -: Pfannenstil
- 38 -: Öffnung
- 39 -: Griff
- 40 -: oberer Rand von 33
- 41 -: Verriegelungsnase
- 42 -: Haltebügel
- 43 -: Haltebügel
- 44 -: Lasche
- 45 -: Erhöhung
- 46 -: Auffangrinne
- 47 -: Blattfeder
- 48 -: Ausnehmung
- 49 -: Abtropfnase
- 50 -: Zunge
- 51 -: Widerhaken
- 52 -: stufenartiger Absatz
- 53 -: unterer Rand von 33
- 54 -: äußerer Rand von 34
- 55 -: Unterkante von 34
- 56 -: Ausnehmung, Durchbrechung
- 57 -: Höhe
- 58 -: Rundschulter
- 59 -: Ausnehmung

## Patentansprüche

1. Abdeckhaube (1, 15, 31) für Brat- und Kochgerätschaften (2, 32) mit einem kegelstumpfförmig ausgebildeten Haubenteil (3, 16, 33), an dem seitlich ein Griff (9, 19, 39) angeordnet ist, und einem mit dem Haubenteil (3, 16, 33) verbindbaren ringförmigen auf der Gerätschaft (2, 32) aufsetzbaren und mit einer innenliegenden Auffangrinne (11, 21, 46) versehenen Bodenteil (4, 17,34), wobei im Bereich der Spitze des Haubenteiles (3, 16, 33) eine Öffnung (8, 18, 38) vorgesehen ist, dadurch gekennzeichnet, daß das Bodenteil (4, 17, 34) und das Haubenteil (3, 16, 33) mittels Verriegelungssmitteln lösbar miteinander verbunden sind und der untere Rand (5, 20, 53) des mit dem Bodenteil (4, 17, 34) verbundenen Haubenteiles (3, 16, 33) im Bereich des äußeren Randes (6, 54) des Bodenteils (4, 17, 34) formschlüssig aufsitzt.

2. Abdeckhaube nach Anspruch 1, dadurch gekennzeichnet, daß das Bodenteil (4, 17, 34) in bezug auf die Unterkante (12, 23, 55) der Auffangrinne (11, 21, 46) eine maximale Höhe (22, 57) zwischen etwa 5 und etwa 15 mm aufweist.

3. Abdeckhaube nach Anspruch 1 oder 2, dadurch gekennzeichnet, daß die Verriegelungsmittel als Blattfeder (26) ausgebildet sind.

4. Abdeckhaube nach Anspruch 3, dadurch gekennzeichnet, daß die Blattfeder (26) eine Verriegelungsnase (27, 41) aufweist.

5. Abdeckhaube nach Anspruch 1 oder 2, dadurch gekennzeichnet, daß das Bodenteil (4) und das Haubenteil (3) an ihren äußeren Rändern (5, 6) flach ausgebildet und miteinander mittels eines Spannringes (7) mit U-förmigem Profil verbindbar sind.

6. Abdeckhaube nach einem der Ansprüche 1 bis 4, dadurch gekennzeichnet, daß an dem Bodenteil (17) randseitige hakenförmige Laschen (24, 44) befestigt sind, in die der untere Rand (20, 53) des Haubenteils (16, 33) einschiebbar ist.

7. Abdeckhaube nach einem der Ansprüche 1 bis 4, 6, dadurch gekennzeichnet, daß der Griff (19, 39) sich i. w. bis zum unteren Rand (20, 53) des Haubenteiles (16, 33) erstreckt.

8. Abdeckhaube nach einem der Ansprüche 1 bis 4, 6, 7, dadurch gekennzeichnet, daß in einem unteren Ende des Griffes (19, 39) eine Blattfeder (26, 47) o. dgl. vorgesehen ist, die eine Ausnehmung, Durchbrechung (25, 56) des Bodenteiles (17, 34) durchgreift und mittels eines nasenförmigen Verriegelungsgliedes, einer Verriegelungsnase (27, 41) o. dgl. das Bodenteil (17, 34) hintergreift.

9. Abdeckhaube nach einem der Ansprüche 1 bis 4, 6 bis 8, dadurch gekennzeichnet, daß mindestens zwei Laschen (24, 44) am Bodenteil (17, 34) angeordnet sind.

10. Abdeckhaube nach einem der Ansprüche 6 bis 9, dadurch gekennzeichnet, daß die Laschen (24, 44) bzw. die Ausnehmung (25, 56) i. w. gleich verteilt über dem Umfang des Randes (54) des Bodenteils (17, 34) angeordnet sind.

11. Abdeckhaube nach einem der Ansprüche 3, 4, 6 bis 10, dadurch gekennzeichnet, daß die im Griff (19, 39) angeordnete Blattfeder (26, 47) mittels eines von außen bedienbaren Bolzens (28, 36) zum Haubenteil (16, 33) hinbewegbar ist.

12. Abdeckhaube nach einem der Ansprüche 4, 6 bis 11, dadurch gekennzeichnet, daß das Boden (4, 17, 34) und das Haubenteil (3, 16, 33) durch eine Bewegung der Verriegelungsnase (27, 41) voneinander trennbar sind.

13. Abdeckhaube nach einem der vorhergehenden Ansprüche, dadurch gekennzeichnet, daß das Bodenteil (4, 17, 34) ein oder mehrere kreisringförmig umlaufende, stufenartige Absätze (52) aufweist, wobei der Durchmesser eines jeden Kreisringes i. w. dem Standarddurchmesser verschiedener Brat- und Kochgerätschaften (2, 32) entspricht.

14. Abdeckhaube nach einem der vorhergehenden Ansprüche, dadurch gekennzeichnet, daß die Öffnung (8, 18, 38) einen Durchmesser im Bereich von etwa 4,5 cm bis etwa 7,5 cm, bevorzugt etwa 6 cm aufweist.

15. Abdeckhaube nach einem der vorhergehenden Ansprüche, dadurch gekennzeichnet, daß der obere Rand (10, 40) des Haubenteils (33) eine sich hin zur Öffnung (8, 18, 38) erstreckende umlaufende Rundschulter (58) aufweist.

16. Abdeckhaube nach einem der vorhergehenden Ansprüche, dadurch gekennzeichnet, daß der obere Rand (10, 40) des Haubenteils (33) eine in den Haubeninnenraum gerichtete, i. w. kreisringförmig umlaufende Abtropfnase (49) aufweist.

17. Abdeckhaube nach einem der vorhergehenden Ansprüche, dadurch gekennzeichnet, daß der Griff (9, 19, 39) in einem oberen Abschnitt auf der Griffaußenseite eine bevorzugt winklig ausgebildete Erhöhung (45) zur Anlage eines Daumens der Griffhand des Benutzers aufweist.

18. Abdeckhaube nach einem der vorhergehenden Ansprüche, dadurch gekennzeichnet, daß der Griff (9, 19, 39) mittels eines ersten, den oberen Rand (10, 40) hakenförmig hintergreifenden Haltebügels (42) sowie eines zweiten, den unteren Rand (5, 20, 53) hakenförmig umgreifenden bzw. hintergreifenden Haltebügels (43) an dem Haubenteil (3, 16, 33) befestigt ist.

19. Abdeckhaube nach Anspruch 18, dadurch gekennzeichnet, daß der erste Haltebügel (42) eine rückwärtige, mit Widerhaken (51) o. dgl. Rast- oder Klemmittel versehene Zunge (50) aufweist, die in einer Ausnehmung (59) am oberen Endabschnitt des Griffes (9, 19, 39) einsteckbar und verrastbar ist.

20. Abdeckhaube nach einem der Ansprüche 4, 8 bis 19, dadurch gekennzeichnet, daß die Blattfeder (26, 47) in eine Ausnehmung (48) am unteren Endabschnitt des Griffes (9, 19, 39) angeordnet ist, wobei an einem Schenkel der insbesondere i. w. U-förmig ausgebildeten Blattfeder (26, 47) die Verriegelungsnase (27, 41) und an dem anderen Schenkel der Haltebügel (43) jeweils insbesondere einstückig angeformt sind.

21. Abdeckhaube nach Anspruch 20, dadurch gekennzeichnet, daß die Blattfeder (26, 47) in der Ausnehmung (48) mittels eines in der Griffwandung eingebrachten Stiftes (35) gesichert ist.

22. Abdeckhaube nach einem der vorhergehenden Ansprüche, dadurch gekennzeichnet, daß das Haubenteil (3, 16, 33) und/oder das Bodenteil (4, 17, 34) aus Borosilicatglas, Aluminium, Edelstahl oder veredeltem Stahlblech bestehen.

## Claims

1. Cover hood (1, 15, 31) for frying and cooking appliances (2, 32) with a frusto-conically shaped hood part (3, 16, 33), at which a handle (9, 19, 39) is arranged laterally, and an annular base part (4, 17, 34), which is provided with an inward collecting channel (11, 21, 46), is settable onto the appliance (2, 32) and is connectable with the hood part (3, 16, 33), wherein an opening (8, 18, 38) is provided in the region of the apex of the hood part (3, 16, 33), characterised thereby, that the base part (4, 17, 34) and the hood part (3, 16, 33) are detachably connected together by means of latching means and the lower rim (5, 20, 53) of the hood part (3, 16, 33) connected with the base part (4, 17, 34) sits shape-lockingly in the region of the outer rim (6, 54) of the base part (4, 17, 34).

2. Cover hood according to claim 1, characterised thereby, that the base part (4, 17, 34) has a maximum height (22, 57) between about 5 and about 15 millimetres with respect to the lower edge (12, 23, 55) of the collecting channel (11, 21, 46).

3. Cover hood according to claim 1 or 2, characterised thereby, that the latching means are constructed as leaf spring (26).

4. Cover hood according to claim 3, characterised thereby, that the leaf spring (26) comprises a latching lug (27, 41).

5. Cover hood according to claim 1 or 2, characterised thereby, that the base part (4) and the hood part (3) are shaped to be flat at their outer rims (5, 6) and connectable together by means of a clamping ring (7) of U-shaped profile.

6. Cover hood according to one of the claims 1 to 4, characterised thereby, that hook-shaped straps (24, 44), into which the lower rim (20, 53) of the hood part (16, 33) is insertable, are fastened at the rim of the base part (17).

7. Cover hood according to one of the claims 1 to 4 and 6, characterised thereby, that the handle (19, 39) extends substantially to the lower rim (20, 53) of the hood part (16, 33).

8. Cover hood according to one of the claims 1 to 4, 6 and 7, characterised thereby, that a leaf spring (26, 47) or the like is provided in a lower end of the handle (19, 39), engages through a cut-out or perforation (25, 26) of the base part (17, 34) and engages behind the base part (17, 34) by means of a lug-shaped latching member, a latching lug (27, 41) or the like.

9. Cover hood according to one of the claims 1 to 4 and 6 to 8, characterised thereby, that at least two straps (24, 44) are arranged at the base part (17, 34).

10. Cover hood according to one of the claims 6 to 9, characterised thereby, that the straps (42, 44) or the cut-out (25, 56) are arranged to be distributed substantially equally over the circumference of the rim (54) of the base part (17, 34).

11. Cover hood according to one of the claims 3, 4 and 6 to 10, characterised thereby, that the leaf spring (26, 47) arranged in the handle (19, 39) is movable towards the hood part (16, 33) by means of a pin (28, 36) operable from outside.

12. Cover hood according to one of the claims 4 and 6 to 11, characterised thereby, that the base part (4, 17, 34) and the hood part (3, 16, 33) are each separable from the other by a movement of the latching lug (27, 41).

13. Cover hood according to one of the preceding claims, characterised thereby, that the base part (4, 17, 34) has one or more annularly encircling, step-like shoulders (52), wherein the diameter of each circular ring substantially corresponds with the standard diameter of different frying and cooking appliances (2, 32).

14. Cover hood according to one of the preceding claims, characterised thereby, that the opening (8, 18, 38) has a diameter in the range of about 4.5 centimetres to about 7.5 centimetres, preferably about 6 centimetres.

15. Cover hood according to one of the preceding claims, characterised thereby, that the upper rim (10, 40) of the hood part (33) comprises an encircling round shoulder (58) extending towards the opening (8, 18, 38).

16. Cover hood according to one of the preceding claims, characterised thereby, that the upper rim (10, 40) of the hood part (33) comprises a substantially annularly encircling drip lip (49) directed towards the interior space of the hood.

17. Cover hood according to one of the preceding claims, characterised thereby, that the handle (9, 19, 39) in an upper portion on the outward side of the grip comprises a preferably angularly shaped protrusion (45) for the support of a thumb of the gripping hand of the user.

18. Cover hood according to one of the preceding claims, characterised thereby, that the handle (9, 19, 39) is fastened at the hood part (3, 16, 33) by means of a first retaining bracket (42) engaging in the shape of a hook behind the upper rim (10, 40) as well as of a second retaining bracket (43) engaging in the shape of a hook behind or around the lower rims (5, 20, 53).

19. Cover hood according to claim 18, characterised thereby, that the first retaining bracket (42) comprises a rearward tongue (50), which is provided with barbs (51) or the like detenting or clamping means and which is pluggable into or detentable in a recess (59) at the upper end portion of the handle (9, 19, 39).

20. Cover hood according to one of the claims 4 and 8 to 19, characterised thereby, that the leaf sprang (26, 47) is arranged in a recess (48) at the lower end portion of the handle (9, 19, 39), wherein the latching lug (27, 41) is shaped on at one limb of the leaf spring (26, 47), which in particular is formed to be substantially U-shaped, and the retaining bracket (43) is shaped on at the other limb, each time in particular integrally.

21. Cover hood according to claim 20, characterised thereby, that the leaf spring (26, 47) is secured in the recess (48) by means of a pin (35) introduced into the wall of the handle.

22. Cover hood according to one of the preceding claims, characterised thereby, that the hood part (3, 16, 33) and/or the base part (4, 17, 34) consist of borosilicate glass, aluminium, fine steel or hardened steel plate.

## Revendications

1. Couvercle (1, 15, 31) pour ustensiles de rôtissage et de cuisson (2, 32), comprenant une partie de calotte de forme tronconique (3, 16, 33), sur laquelle est disposée latéralement une poignée (9, 19, 39), et une partie de base annulaire (4, 17, 34) pouvant être reliée à la partie de calotte (3, 16, 33), reposant sur les ustensiles de cuisine et pourvue d'une gouttière de récupération intérieure (11, 21, 46), une ouverture (8, 18, 38) étant prévue au sommet de la partie de calotte (3, 16, 33), caractérisé en ce que la partie de base (4, 17, 34) et la partie de calotte (3, 16, 33) sont reliées de manière démontable l'une à l'autre, à l'aide de moyens de verrouillage, et que le bord inférieur (5, 20, 53) de la partie de calotte (3, 16, 33) reliée à la partie de base (4, 17, 34) repose sur celle-ci au niveau du bord extérieur (6, 54) de la partie de base (4, 17, 34) par conjugaison des formes.

2. Couvercle selon la revendication 1, caractérise en ce que la partie de base (4, 17, 34) présente une hauteur maximale (22, 57), par rapport au bord inférieur (12, 23, 55) de la gouttière de récupération (11, 21, 46), qui se situe entre 5 et 15 mm environ.

3. Couvercle selon la revendication 1 ou 2, caractérisé en ce que les moyens de verrouillage sont réalisés sous forme d'un ressort à lame (26).

4. Couvercle selon la revendication 3, caractérisé en ce que le ressort à lame (26) comporte un nez de verrouillage (27, 41).

5. Couvercle selon la revendication 1 ou 2, caractérisé en ce que la partie de base (4) et la partie de calotte (3) sont configurées, au niveau de leurs bords extérieurs (5, 6), de façon plate, et peuvent être reliées l'une à l'autre au moyen d'un anneau de serrage (7) ayant un profil en forme de U.

6. Couvercle selon l'une des revendications 1 à 4, caractérisé en ce que des éclisses (24, 44) en forme de crochets sont intégrées au bord de la partie de base (17, 34), dans lesquelles peut être emmanché le bord inférieur (20, 53) de la partie de calotte (16, 33).

7. Couvercle selon l'une des revendications 1 à 4 ou 6, caractérisé en ce que la poignée (19, 39) s'étend essentiellement jusqu'au bord inférieur (20, 53) de la partie de calotte (16, 33).

8. Couvercle selon l'une des revendications 1 à 4, 6 ou 7, caractérisé en ce qu'un ressort à lame (26, 47) ou similaire est disposé dans l'extrémité inférieure de la poignée (19, 39), ce ressort traversant une lumière ou encoche (25, 56) de la partie de base (17, 34) et s'accrochant sous la partie de base (17, 34) par l'intermédiaire d'un élément de verrouillage en forme d'ergot, d'un nez de verrouillage (27, 41), ou similaire.

9. Couvercle selon l'une des revendications 1 à 4 ou 6 à 8, caractérisé en ce qu'au moins deux éclisses (24, 44) sont agencées sur la partie de base (17, 34).

10. Couvercle selon l'une des revendications 6 à 9, caractérisé en ce que les éclisses (24, 44) ou la lumière (25, 56) sont réparties essentiellement uniformément sur la circonférence du bord (54) de la partie de base (17, 34).

11. Couvercle selon l'une des revendications 3, 4 ou 6 à 10, caractérisé en ce que le ressort à lame (26, 47) disposé dans la poignée (19, 39) peut être comprimé en direction de la partie de calotte (16, 33) par l'intermédiaire d'un bouton (28, 36) pouvant être actionné de l'extérieur.

12. Couvercle selon l'une des revendications 4 ou 6 à 11, caractérisé en ce que les partie de base (4, 17, 34) et partie de calotte (3, 16, 33) peuvent être séparées l'une de l'autre par un déplacement du nez de verrouillage (27, 41).

13. Couvercle selon l'une des revendications précédentes, caractérisé en ce que la partie de base (4, 17, 34) présente un ou plusieurs paliers annulaires circulaires circonférentiels (52) en forme de gradins, le diamètre de chaque anneau circulaire correspondant essentiellement à un diamètre standard de différents ustensiles de rôtissage et de cuisson (2, 32).

14. Couvercle selon l'une des revendications précédentes, caractérisé en ce que l'ouverture (8, 18, 38) présente un diamètre de l'ordre de 4,5 cm à 7,5 cm environ, de préférence un diamètre d'environ 6 cm.

15. Couvercle selon l'une des revendications précédentes, caractérisé en ce que le bord supérieur (10, 40) de la partie de calotte (33) présente un épaulement arrondi circonférentiel (58) s'étendant en direction de l'ouverture (8, 18, 38).

16. Couvercle selon l'une des revendications précédentes, caractérisé en ce que le bord supérieur (10, 40) de la partie de calotte (33) comporte un larmier circonférentiel (49) essentiellement annulaire, dirigé vers l'intérieur de la calotte.

17. Couvercle selon l'une des revendications précédentes, caractérisé en ce que la poignée (9, 19, 39) comporte, dans une portion supérieure, un bossage (45) de forme angulaire, disposé du côté extérieur de la poignée, destiné à offrir un appui pour le pouce de la main de l'utilisateur.

18. Couvercle selon l'une des revendications précédentes, caractérisé en ce que la poignée (9, 19, 39) est fixée sur la partie de calotte (3, 16, 33) au moyen d'une première attache (42) en forme de crochet s'accrochant sur le bord supérieur (10, 40), et au moyen d'une deuxième attache (43) en forme de crochet encerclant ou s'accrochant sous le bord inférieur (5, 20, 53).

19. Couvercle selon la revendication 18, caractérisé en ce que la première attache (42) comporte à l'arrière une languette (50) pourvue de crans d'arrêt (51) ou de moyens d'arrêt ou de serrage similaires, cette languette pouvant être emmanchée et verrouillée dans un évidement (59) ménagé dans la section terminale supérieure de la poignée (9, 19, 39).

20. Couvercle selon l'une des revendications 4 ou 8 à 19, caractérisé en ce que le ressort à lame (26, 47) est disposé dans un évidement (48) réalisé dans la section terminale inférieure (9, 19, 39) de la poignée, le nez de verrouillage (27, 41) étant conformé d'un seul tenant sur l'une des branches du ressort à lame (26, 47) essentiellement configuré en forme de U, et l'attache (43) étant conformée d'un seul tenant notamment sur l'autre branche.

21. Couvercle selon la revendication 20, caractérisé en ce que le ressort à lame (26, 47) est fixé dans l'évidement (48) au moyen d'une goupille (35) insérée dans la paroi de la poignée.

22. Couvercle selon l'une des revendications précédentes, caractérisé en ce que la partie de calotte (3, 16, 33) et/ou la partie de base (4, 17, 34) est/sont réalisée(s) en verre de borosilicate, en aluminium, en acier inoxydable ou en tôle d'acier traitée.
